# FASCICULE DE BREVET EUROPEEN

(11) **EP 2 020 319 B1**
(45) Date de publication et mention de la délivrance du brevet: **15.09.2010**
(21) Numéro de dépôt: 08160064.5
(22) Date de dépôt: 10.07.2008
(51) Int. Cl.: B60H 1/00

(54) **Groupe de climatisation et guide de faisceau électrique associé**
Klimaanlage und entsprechende Kabelbaumführung
Air-conditioning unit and associated wiring harness guide

(30) Priorité: 31.07.2007 FR 0756851
(43) Date de publication de la demande: 04.02.2009
(73) Titulaire: Peugeot Citroën Automobiles SA, 78140 Vélizy-Villacoublay (FR)
(72) Inventeur: Bessac, Cécile, 92250 La Garenne Colombes (FR); Charles, Jérôme, 28310 Santilly (FR)
(74) Mandataire: Vigand, Régis Louis Michel

(56) Documents cités:
- EP-A- 1 216 862
- DE-A1-102005 015 075
- DE-U1-202006 011 336
- FR-A- 2 813 047

## Description

L'invention concerne le domaine des groupes de climatisation de véhicule automobile et des guides de faisceau électriques qui sont associés à ces groupes de climatisation.

Un tel groupe de climatisation est connu de FR 2813047, qui constitue l'art antérieur le plus proche.

Selon un premier art antérieur, il est connu un groupe de climatisation dont le mécanisme incorpore des roues dentées situées à l'intérieur du carter. Le faisceau électrique provenant de la planche de bord chemine à l'extérieur du carter au voisinage de la surface extérieure du carter. La place disponible au voisinage de la surface extérieure du carter rend le cheminement du faisceau électrique non critique. Ainsi quelques attaches directement soudées sur la surface extérieure du carter suffisent à en assurer le cheminement en toute sécurité. Malgré l'encombrement relatif de l'espace au niveau de la surface extérieure du carter, le cheminement du faisceau électrique étant non critique, les quelques endroits libres sur la surface extérieure du carter sont utilisables pour y placer les attaches qui guideront le faisceau électrique le long de la surface extérieure du carter. Un carter est une enveloppe protectrice des organes d'un mécanisme pouvant contenir un fluide.

Selon un deuxième art antérieur, il est connu un groupe de climatisation dont le mécanisme incorpore des roues dentées à l'extérieur du carter. Le faisceau électrique provenant de la planche de bord chemine à l'extérieur du carter au voisinage de la surface extérieure du carter.

La présence des roues dentées à l'extérieur du carter cause un problème, elle rend le cheminement du faisceau électrique au voisinage de ces roues dentées relativement dangereux. En effet, en cas de contact entre le faisceau électrique et les roues dentées qui tournent, deux risques surgissent. Le premier risque est que le faisceau électrique se bloque dans le mécanisme des roues dentées, risquant alors d'entraîner un blocage du groupe de climatisation éventuellement suivi par une détérioration du groupe de climatisation. Le deuxième risque est que, même sans se coincer dans le mécanisme des roues dentées, le faisceau électrique s'abîme au contact des roues dentées par frottement avec les roues dentées. Le cheminement du faisceau électrique va devenir critique. En effet, d'une part, il doit s'écarter du voisinage des roues dentées, et d'autre part, il doit maintenant cheminer dans un milieu plus dense du fait de la présence des roues dentées, tout en ne s'éloignant pas trop du voisinage des roues dentées, car cela amènerait le faisceau électrique au voisinage d'autres éléments dangereux, comme par exemple un renfort métallique de type jambe de force métallique qui est situé plus vers le bas du carter que les roues dentées et dont le contact risquerait à la longue, la détérioration de la gaine du faisceau électrique aidant, de provoquer un court-circuit, toujours néfaste dans un véhicule automobile.

Selon l'invention, il est considéré que toutes ces nouvelles contraintes sur le cheminement du faisceau électrique, dans le cas où les roues dentées sont disposées à l'extérieur du carter du groupe de climatisation, rendent les quelques attaches directement soudées sur la surface extérieure du carter du deuxième art antérieur insuffisantes pour permettre un cheminement en toute sécurité du faisceau électrique provenant de la planche de bord du véhicule automobile. Un cheminement est une ligne polygonale reliant deux points.

Un cheminement précis du faisceau électrique va requérir des points de contact entre ce faisceau électrique et son ou ses guides à des endroits ne correspondant pas forcément aux endroits où des points de fixation sur la surface extérieure du carter sont disponibles. Les simples attaches de l'art antérieur, comprenant un élément de guidage exactement superposé à l'élément de fixation au carter sont donc considérées par l'invention comme inadéquates pour assurer un cheminement en toute sécurité du faisceau électrique dans un environnement devenu à la fois plus dangereux et plus dense. C'est pourquoi l'invention propose un ou plusieurs guides, dont chacun comprend plusieurs points de contact avec le faisceau électrique pour le guider ainsi que plusieurs points de fixation sur le carter du groupe de climatisation, le parcours suivi par les points de contact étant différent du parcours suivi par les points de fixation, ce qui permet un cheminement précis du faisceau électrique à l'endroit voulu, même si les emplacements disponibles pour les points de fixation ne sont pas quant à eux aux endroits voulus. De préférence, un groupe de climatisation comprend deux guides, un seul guide sur chacune des deux surfaces extérieures de carter où se situe un jeu de roues dentées.

L'invention protège tant le groupe de climatisation ainsi obtenu que le guide particulier qui permet au faisceau électrique de cheminer au voisinage des roues dentées à la surface de son carter en toute sécurité.

Selon l'invention, il est prévu un groupe de climatisation de véhicule automobile comprenant : un carter ; un mécanisme comprenant plusieurs roues dentées situées à l'extérieur du carter ; un dispositif de guidage, fixé au carter, d'un faisceau électrique, à la surface extérieure du carter, au voisinage des roues dentées ; **caractérisé en ce que** le dispositif de guidage comprend au moins un guide : qui est fixé au carter par plusieurs points de fixation ; qui est destiné à avoir plusieurs points de contact le long du faisceau électrique ; et en ce que les points de contact et les points de fixation sont disposés les uns par rapport aux autres de manière à ce que le cheminement des points de contact ne suive pas le cheminement des points de fixation.

Selon l'invention, il est également prévu un guide de faisceau électrique, destiné à être monté sur un groupe de climatisation de véhicule automobile comprenant : plusieurs points de fixation destinés à le fixer à un carter de groupe de climatisation ; plusieurs points de contact le long du faisceau électrique destiné à être guidé ; les points de contact et les points de fixation étant disposés les uns par rapport aux autres de manière à ce que le cheminement des points de contact ne suive pas le cheminement des points de fixation.

L'invention va maintenant être décrite plus en détail à l'aide des figures ci-après, données à titre d'exemples illustratifs et non limitatifs, où :
- la figure 1 représente schématiquement une vue en deux dimensions d'une portion d'un exemple simplifié de groupe de climatisation de véhicule automobile afin de mieux mettre en évidence le principe de l'invention ;
- la figure 2 représente schématiquement une vue en trois dimensions d'une portion d'un exemple de groupe de climatisation de véhicule automobile selon l'invention.

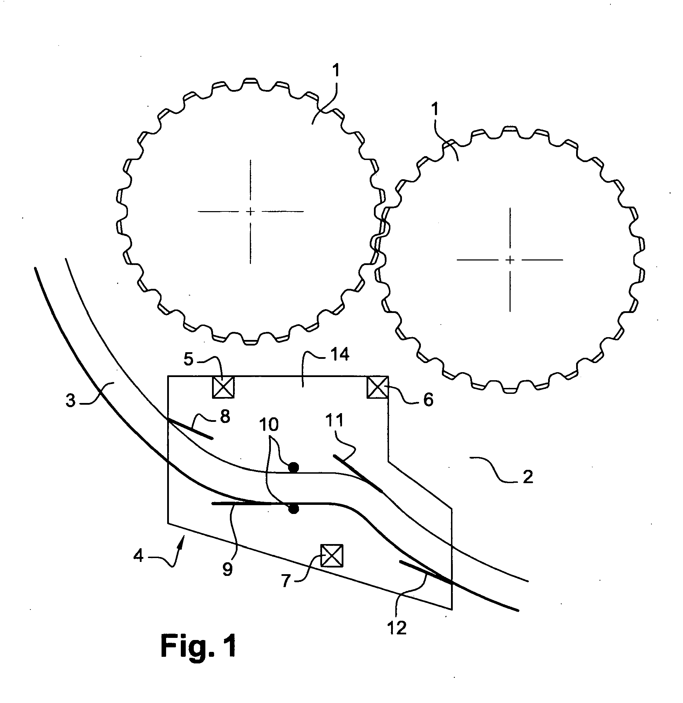

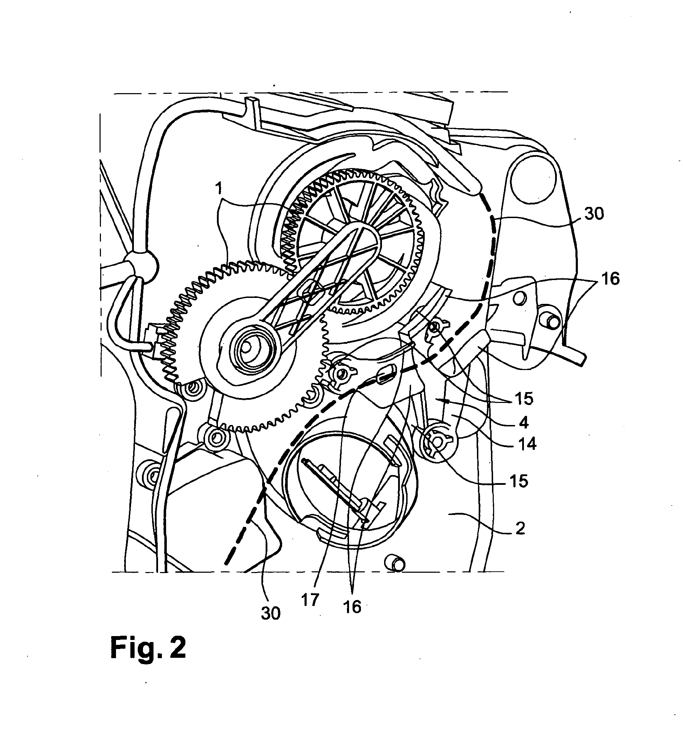

La figure 1 représente schématiquement une vue en deux dimensions d'une portion d'un exemple simplifié de groupe de climatisation de véhicule automobile afin de mieux mettre en évidence le principe de l'invention. Le groupe de climatisation comprend un carter 2 qui enveloppe le mécanisme du groupe de climatisation. Toutefois, dans le groupe de climatisation considéré, une partie du mécanisme considéré intègre plusieurs roues dentées 1 , qui sont ici au nombre de deux et qui sont situées à l'extérieur du carter 2. Un dispositif de guidage 4, fixé au carter 2 de manière à être rendu solidaire du carter 2, d'un faisceau électrique 3, à la surface extérieure du carter 2, au voisinage des roues dentées 1 , va permettre au faisceau électrique 3 de cheminer en toute sécurité sans risque d'interférence avec les roues dentées 1, tout en se faufilant dans l'espace laissé disponible par les autres pièces du véhicule automobile, pièces qui ne seront pour une grande partie d'entre elles pas représentées sur les figures 1 et 2, afin de mieux montrer le guide et de mieux pouvoir comprendre l'intérêt de sa structure. La figure 1 a surtout vocation à expliquer le principe mis en oeuvre dans un guide selon l'invention qui est donc excessivement simplifié pour le clarifier, tandis que la figure 2 montre un guide réel avec les détails de sa forme.

De manière générale, les roues dentées 1 participent au pilotage des volets du groupe de climatisation et le faisceau électrique 3 provient d'une planche de bord de véhicule automobile.

Pour permettre le cheminement du faisceau électrique 3, le dispositif de guidage comprend au moins un guide 4 de préférence monobloc, ou du moins dont toutes les parties sont reliées entre elles et pas simplement rattachées à une même surface de carter ; il pourrait en contenir plusieurs, mais généralement un guide monobloc, en raison de son guidage très précis, suffira. Le guide monobloc 4 est fixé au carter 2 par plusieurs points de fixation 5, 6 et 7. Les points de fixation 5 à 7 sont au voisinage du carter 2. Le faisceau électrique 3 est guidé par plusieurs points de contact le long du faisceau électrique qui sont ici successivement les points 8, 9, 10, 11 et 12. Les points de contact 8 à 12 et les points de fixation 5 à 7 sont disposés les uns par rapport aux autres de manière à ce que le cheminement des points de contact 8 à 12 que suit le tracé du faisceau électrique 3 ne suive pas le cheminement des points de fixation 5 à 7, quelque soit le cheminement considéré, par exemple 5 puis 6 puis 7 ou 5 puis 7, etc... En effet, si le cheminement des points de contact pouvait se superposer au cheminement des points de fixation, il serait possible d'utiliser les attaches simples du deuxième art antérieur, ce qui en pratique ôterait une grande partie de l'intérêt du guide 4 selon l'invention. Le guide monobloc 4 comprend aussi un support 14. Le point de contact 10 est particulier dans la mesure où il ne se contente pas de guider le faisceau électrique 3, mais constitue aussi un point de fixation du faisceau électrique 3 sur le support 14 du guide monobloc 4. Il est clair qu'avec le système des attaches simples de l'art antérieur, le faisceau électrique 3 serait passé soit au niveau des attaches 5 et 6, c'est-à-dire trop près des roues dentées 1 , soit par l'attache 7 en direction du bas, c'est-à-dire vers le renfort métallique à éviter. Le support 14 est présenté avec une forme polygonale simple pour ne pas surcharger la figure 1 et ne pas nuire à la clarté de l'explication relative au cheminement du faisceau électrique 3; cependant, en pratique, sa forme est plus complexe, car toute la matière inutile à la rigidité du support est enlevée tandis que peuvent être rajoutés des renforts et des nervures à d'autres endroits. La différence de cheminement a été présentée en deux dimensions pour des raisons de clarté ; en pratique, la distance à laquelle le point de contact se trouve du carter peut intervenir, dans la mesure où même si le point de contact est juste à l'aplomb du point de fixation, passer par le point de contact ou par le point de fixation ne constitue pas le même cheminement, puisque les deux points, de contact et de fixation, ne sont pas à la même distance de la surface extérieure du carter.

De préférence, le nombre de points de contact du guide est strictement supérieur au nombre de points de fixation du guide. En effet, le cheminement entre les pièces existantes, surtout si la densité de pièces autour du carter du groupe de climatisation est importante, ce qui est le cas dans certains avants de véhicule automobile, au travers de l'espace disponible, peut être relativement tortueux et être rendu tout à fait impossible s'il faut se limiter à passer par les quelques endroits disponibles sur la surface extérieure du carter 2 pour y placer d'éventuelles attaches. Le guide 4 selon l'invention, dans sa version préférentielle autorisant beaucoup de points de contact pour peu de points de fixation, devient alors particulièrement intéressant.

De préférence, le guide 4 est une pièce distincte du carter 2. Sa forme qui peut devenir relativement complexe ne le prédispose pas à être monobloc avec le carter auquel il va être fixé.

De préférence, le guide 4 est structuré de manière à confiner le cheminement du faisceau électrique 3 dans un plan, les points de fixation n'étant pas tous situés à la même distance du plan. Les points de contact 8 à 12 sont alors tous disposés dans le même plan. Les points de fixation 5 à 7 sont disposés sur la surface extérieure du carter 2, qui n'est souvent pas plane, à différentes distances du plan contenant les points de contact 8 à 12. Entre ce plan et chacun des points de fixations 5 à 7 est disposée une barre de matière qui relie ledit point de fixation audit plan. Lorsque cette barre est relativement longue, comme ce sera visible sur la figure 2, notamment avec le point de fixation le plus à droite, le fait que les différents points de fixation appartiennent à la même structure de guide 4 permet d'avoir un guide 4 relativement rigide. Si chaque extrémité de barre surplombant un point de fixation constituait un point de contact isolé, c'est-à-dire non intégré au reste de la structure d'un guide, à supposer que les points de contact isolés ainsi définis suffisent pour le cheminement du faisceau électrique 3, le dispositif obtenu en plusieurs guides ponctuels séparés entre eux serait fragile, chacune des barres, seule et en porte-à-faux, pouvant facilement être brisée.

De préférence, le guide 4 est en matière plastique, par exemple en polypropylène.

La figure 2 représente schématiquement une vue en trois dimensions d'une portion d'un exemple de groupe de climatisation de véhicule automobile selon l'invention. Au voisinage des roues dentées 1, le guide 4 est fixé sur la surface extérieure du carter 2. De préférence, le guide 4 comprend d'une part un support 14 comprenant des points de jonction 15 reliant par des barres les points de fixation au support 14, et d'autre part plusieurs éléments de guidage, en forme de tronçons de gouttière 16, matérialisant le cheminement du faisceau électrique 3. La forme en tronçons de gouttière est bien adaptée pour le guidage d'un faisceau électrique 3 qui est tout en longueur. Le guide 4 comprend un point de fixation 17 du faisceau électrique 13 sur le guide 4. Le cheminement 30 du faisceau électrique 3 est indiqué par une ligne en gros traits pointillés. Le faisceau électrique 3 va d'abord arriver du haut, puis passer dans les éléments en forme de tronçons de gouttière 16, pour repartir ensuite vers la droite en continuant à descendre.

## Revendications

1. Groupe de climatisation de véhicule automobile comprenant :
- un carter (2) ;
- un mécanisme comprenant plusieurs roues dentées (1) situées à l'extérieur du carter (2) ;
- un dispositif de guidage (4), fixé au carter (2), d'un faisceau électrique (3), à la surface extérieure du carter (2), au voisinage des roues dentées (1) ;
**caractérisé en ce que** le dispositif de guidage comprend au moins un guide (4) :
- qui est fixé au carter (2) par plusieurs points de fixation (5 à 7) ;
- qui est destiné à avoir plusieurs points de contact (8 à 12) le long du faisceau électrique (3) ;
et **en ce que** les points de contact (8 à 12) et les points de fixation (5 à 7) sont disposés les uns par rapport aux autres de manière à ce que le cheminement des points de contact (8 à 12) ne suive pas le cheminement des points de fixation (5 à 7).

2. Groupe de climatisation selon la revendication 1, **caractérisé en ce que** le nombre de points de contact (8 à 12) du guide (4) est strictement supérieur au nombre de points de fixation (5 à 7) du guide (4).

3. Groupe de climatisation selon l'une quelconque des revendications précédentes, **caractérisé en ce que** le guide (4) est une pièce distincte du carter (2).

4. Groupe de climatisation selon l'une quelconque des revendications précédentes, **caractérisé en ce que** le guide (4) est structuré de manière à confiner le cheminement du faisceau électrique (3) dans un plan, les points de fixation (5 à 7) n'étant pas tous situés à la même distance dudit plan.

5. Groupe de climatisation selon l'une quelconque des revendications précédentes, **caractérisé en ce que** le guide (4) comprend d'une part un support (14) comprenant les points de fixation (5 à 7) et d'autre part plusieurs éléments de guidage (16), en forme de tronçons de gouttière, matérialisant le cheminement (30) du faisceau électrique (3).

6. Groupe de climatisation selon l'une quelconque des revendications précédentes, **caractérisé en ce que** les roues dentées (1) participent au pilotage des volets du groupe de climatisation.

7. Groupe de climatisation selon l'une quelconque des revendications précédentes, **caractérisé en ce que** le guide (4) est en matière plastique.

8. Groupe de climatisation selon l'une quelconque des revendications précédentes, **caractérisé en ce que** le guide (4) est monobloc.

9. Véhicule comprenant une planche de bord et un groupe de climatisation, **caractérisé en ce que** le groupe de climatisation est selon l'une quelconque des revendications précédentes et **en ce que** ledit faisceau électrique (3) provient de ladite planche de bord.

10. Guide de faisceau électrique, destiné à être monté sur un groupe de climatisation de véhicule automobile comprenant :
- plusieurs points de fixation (5 à 7) destinés à le fixer à un carter de groupe de climatisation ;
- plusieurs points de contact (8 à 12) le long du faisceau électrique destiné à être guidé ;
les points de contact (8 à 12) et les points de fixation (5 à 7) étant disposés les uns par rapport aux autres de manière à ce que le cheminement des points de contact ne suive pas le cheminement des points de fixation.

11. Guide selon la revendication 10, **caractérisé en ce que** le nombre de points de contact (8 à 12) du guide (4) est strictement supérieur au nombre de points de fixation (5 à 7) du guide (4).

12. Guide selon l'une quelconque des revendications 10 à 11, **caractérisé en ce que** le guide (4) comprend d'une part un support (14) comprenant les points de fixation (5 à 7) et d'autre part plusieurs éléments de guidage (16), en forme de tronçons de gouttière, matérialisant le cheminement du faisceau électrique destiné à être guidé.

13. Guide selon l'une quelconque des revendications 10 à 12, **caractérisé en ce que** le guide (4) est en matière plastique.

14. Guide selon l'une quelconque des revendications 10 à 13, **caractérisé en ce que** le guide (4) est monobloc.

## Claims

1. Motor vehicle air conditioning unit comprising:
- a casing (2);
- a mechanism comprising central gearwheels (1) situated outside the casing (2);
- a guide device (4), fixed to the casing (2), for guiding an electrical wiring harness (3) on the exterior surface of the casing (2) in the vicinity of the gearwheels (1);
**characterized in that** the guide device comprises at least one guide (4):
- which is fixed to the casing (2) by several fixing points (5 to 7);
- which is intended to have several points of contact (8 to 12) along the wiring harness (3);
and **in that** the points of contact (8 to 12) and the fixing points (5 to 7) are positioned relative to one another in such a way that the path of the points of contact (8 to 12) does not follow the path of the fixing points (5 to 7).

2. Air conditioning unit according to Claim 1, **characterized in that** the number of points of contact (8 to 12) of the guide (4) is strictly greater than the number of fixing points (5 to 7) of the guide (4).

3. Air conditioning unit according to either one of the preceding claims, **characterized in that** the guide (4) is a component separate from the casing (2).

4. Air conditioning unit according to any one of the preceding claims, **characterized in that** the guide (4) is structured in such a way [???????] the path of the wiring harness (3) to a plane, the fixing point (5 to 7) not all being situated the same distance from said plane.

5. Air conditioning unit according to any one of the preceding claims, **characterized in that** the guide (4) comprises, on the one hand, a support (14) comprising the fixing points (5 to 7) and, on the other hand, several guide elements (16) in the form of lengths of channel sections embodying the path (30) of the wiring harness (3).

6. Air conditioning unit according to any one of the preceding claims, **characterized in that** the gearwheels (1) play a part in controlling the flaps of the air conditioning unit.

7. Air conditioning unit according to any one of the preceding claims, **characterized in that** the guide (4) is made of plastic.

8. Air conditioning unit according to any one of the preceding claims, **characterized in that** the guide (4) is of one piece.

9. Vehicle comprising an instrument panel and an air conditioning unit, **characterized in that** the air conditioning unit is one according to any one of the preceding claims, and **in that** the said wiring harness (3) leads from the said instrument panel.

10. Wiring harness guide intended to be mounted on a motor vehicle air conditioning unit, comprising:
- several fixing points (5 to 7) intended to fix it to an air conditioning unit casing;
- several points of contact (8 to 12) along the wiring harness that is to be guided;
the points of contact (8 to 12) and the fixing points (5 to 7) being positioned relative to one another in such a way that the path of the points of contact does not follow the path of the fixing points.

11. Guide according to Claim 10, **characterized in that** the number of points of contact (8 to 12) of the guide (4) is strictly greater than the number of fixing points (5 to 7) of the guide (4).

12. Guide according to either one of Claims 10 and 11, **characterized in that** the guide (4) comprises, on the one hand, a support (14) comprising the fixing points (5 to 7) and, on the other hand, several guide elements (16) in the form of lengths of channel sections embodying the path (30) of the wiring harness (3).

13. Guide according to any one of Claims 10 to 12, **characterized in that** the guide (4) is made of plastic.

14. Guide according to any one of Claims 10 to 13, **characterized in that** the guide (4) is of one piece.

## Patentansprüche

1. Klimaanlagenaggregat für Kraftfahrzeuge, das aufweist:
- ein Gehäuse (2);
- einen Mechanismus mit mehreren Zahnrädern (1), die sich außerhalb des Gehäuses (2) befinden;
- eine Führungsvorrichtung (4), die am Gehäuse (2) befestigt ist, für einen Kabelbaum (3) an der äußeren Oberfläche des Gehäuses (2) in der Nähe der Zahnräder (1);
**dadurch gekennzeichnet, dass** die Führungsvorrichtung mindestens eine Führung (4) aufweist:
- die am Gehäuse (2) durch mehrere Befestigungspunkte (5 bis 7) befestigt ist;
- die mehrere Kontaktpunkte (8 bis 12) entlang des Kabelbaums (3) aufweisen soll;
und dass die Kontaktpunkte (8 bis 12) und die Befestigungspunkte (5 bis 7) in Bezug aufeinander so angeordnet sind, dass der Verlauf der Kontaktpunkte (8 bis 12) nicht dem Verlauf der Befestigungspunkte (5 bis 7) folgt.

2. Klimaanlagenaggregat nach Anspruch 1, **dadurch gekennzeichnet, dass** die Anzahl von Kontaktpunkten (8 bis 12) der Führung (4) streng größer als die Anzahl von Befestigungspunkten (5 bis 7) der Führung (4) ist.

3. Klimaanlagenaggregat nach einem der vorhergehenden Ansprüche, **dadurch gekennzeichnet, dass** die Führung (4) ein vom Gehäuse (2) verschiedenes Teil ist.

4. Klimaanlagenaggregat nach einem der vorhergehenden Ansprüche, **dadurch gekennzeichnet, dass** die Führung (4) so strukturiert ist, dass der Verlauf des Kabelbaums (3) auf eine Ebene beschränkt ist, wobei die Befestigungspunkte (5 bis 7) nicht alle im gleichen Abstand von der Ebene liegen.

5. Klimaanlagenaggregat nach einem der vorhergehenden Ansprüche, **dadurch gekennzeichnet, dass** die Führung (4) einerseits einen Träger (14) mit den Befestigungspunkten (5 bis 7) und andererseits mehrere Führungselemente (16) in Form von Rinnenabschnitten aufweist, die den Verlauf (30) des Kabelbaums (3) verwirklichen.

6. Klimaanlagenaggregat nach einem der vorhergehenden Ansprüche, **dadurch gekennzeichnet, dass** die Zahnräder (1) an der Steuerung der Klappen des Klimaanlagenaggregats teilnehmen.

7. Klimaanlagenaggregat nach einem der vorhergehenden Ansprüche, **dadurch gekennzeichnet, dass** die Führung (4) aus Kunststoff besteht.

8. Klimaanlagenaggregat nach einem der vorhergehenden Ansprüche, **dadurch gekennzeichnet, dass** die Führung (4) einteilig ausgebildet ist.

9. Fahrzeug mit einem Armaturenbrett und einem Klimaanlagenaggregat, **dadurch gekennzeichnet, dass** das Klimaanlagenaggregat wie in einem der vorhergehenden Ansprüche angegeben beschaffen ist und dass der Kabelbaum (3) vom Armaturenbrett ausgeht.

10. Führung für einen Kabelbaum, die an einem Klimaanlagenaggregat eines Kraftfahrzeugs montiert werden soll und aufweist:
- mehrere Befestigungspunkte (5 bis 7), die dazu bestimmt sind, sie an einem Gehäuse eines Klimaanlagenaggregats zu befestigen;
- mehrere Kontaktpunkte (8 bis 12) entlang des Kabelbaums, der geführt werden soll;
wobei die Kontaktpunkte (8 bis 12) und die Befestigungspunkte (5 bis 7) in Bezug aufeinander so angeordnet sind, dass der Verlauf der Kontaktpunkte nicht dem Verlauf der Befestigungspunkte folgt.

11. Führung nach Anspruch 10, **dadurch gekennzeichnet, dass** die Anzahl von Kontaktpunkten (8 bis 12) der Führung (4) streng größer ist als die Anzahl von Befestigungspunkten (5 bis 7) der Führung (4).

12. Führung nach einem der Ansprüche 10 bis 11, **dadurch gekennzeichnet, dass** die Führung (4) einerseits einen Träger (14) mit den Befestigungspunkten (5 bis 7) und andererseits mehrere Führungselemente (16) in Form von Rinnenabschnitten aufweist, die den Verlauf des Kabelbaums, der geführt werden soll, verwirklichen.

13. Führung nach einem der Ansprüche 10 bis 12, **dadurch gekennzeichnet, dass** die Führung (4) aus Kunststoff besteht.

14. Führung nach einem der Ansprüche 10 bis 13, **dadurch gekennzeichnet, dass** die Führung (4) einteilig ausgebildet ist.
